## Europäisches Patentamt

## European Patent Office

## Office européen des brevets

(19)

(11) Veröffentlichungsnummer : **0 035 750**
**B1**

(12) **EUROPÄISCHE PATENTSCHRIFT**

(45) Veröffentlichungstag der Patentschrift :
08.02.84

(21) Anmeldenummer : **81101568.4**

(22) Anmeldetag : **05.03.81**

(51) Int. Cl.³ : **F 16 L 47/02, B 29 C 27/06**

(54) Schweissverbindung für Kunststoffrohre.

(30) Priorität : **10.03.80 CH 1850/80**

(43) Veröffentlichungstag der Anmeldung :
**16.09.81 Patentblatt 81/37**

(45) Bekanntmachung des Hinweises auf die Patenterteilung : **08.02.84 Patentblatt 84/06**

(84) Benannte Vertragsstaaten :
**AT BE CH DE FR GB IT LI NL SE**

(56) Entgegenhaltungen :
**DE-A- 2 514 827**
**DE-A- 2 721 340**
**FR-A- 1 547 337**
**FR-A- 2 077 990**
**FR-A- 2 339 239**
**FR-A- 2 422 896**
**US-A- 4 096 017**

(73) Patentinhaber : **GEORG FISCHER AKTIENGESELL-
SCHAFT**
**Mühlentalstrasse 105**
**CH-8201 Schaffhausen (CH)**

(72) Erfinder : **Reich, Fritz**
**Schulstrasse 449**
**CH-8448 Uhwiesen (CH)**
Erfinder : **Thalmann, Alfred**
**Schnydergasse 104**
**CH-8448 Uhwiesen (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Schweissverbindung für Kunststoffrohre

Die Erfindung betrifft eine Schweissverbindung gemäss dem Obergriff des Anspruches 1.

Aus der CH-A-570 577 wurde eine Schweissverbindung bekannt, mittels der eine Rohrverzweigung hergestellt werden kann. Hierzu wird ein auf einer Schelle sitzender Anschlussstutzen auf ein bestehendes Rohr aufgesetzt, und die Schelle mittels einer zwischen Rohr und Schelle eingelegten Heizmatte mit dem Rohr verschweisst. Hernach wird das Rohr im Bereich der Oeffnung des Anschlussrohres aufgebohrt. Mit dieser Schweissverbindung, wonach die dort beschriebene Schelle zum Aufsetzen auf ein intaktes Rohr verwendet wird, wobei keine völlige Dichtheit über den ganzen Rohrumfang nötig ist, würde bei einer Verwendung für eine Verbindung zweier Rohre an den zusammenstossenden Enden der Heizmatte und der Schelle toleranzbedingt jeweils ein durchgehender Längsspalt auftreten der zu einem Fehler in der Verschweissung führen kann.

Aus der DE-A-27 21 340 wurde eine Verbindungsmuffe für zweifluchtende, plastikummantelte Rohre bekannt, welche aus einem breiten zu einem Zylinder gebogenen, innen kunststoffbeschichteten Band besteht. An den sich überlappenden Enden des Bandes trägt die Muffe Klemmeinrichtungen, mittels der sie auf einer Rohrverbindung festklemmbar ist. Die Dauerverbindung wird durch Schmelzverschweissung der Kunststoffschicht der Muffe mit der Ummantelung der Rohrenden unter Wärmeeinwirkung hergestellt. Nach Erkaltung kann die Klemmeinrichtung entfernt werden, um eine einfache Form der Verbindung zu erhalten. Eine in die Muffe eingelegte Heizmatte ist nicht vorgesehen.

Die in der DE-A-27 21 340 offenbarte Methode ist nicht bei Rohrleitungen anwendbar, welche grösseren mechanischen, thermischen oder chemischen Belastungen ausgesetzt sind, da eine Schmelzverschweissung mit Beheizung von aussen eine geringere Widerstandsfähigkeit aufweist als eine Verschweissung mit eingelegter Heizmatte.

Weiter ist durch die US-A-4 096 017 eine Schweissverbindung für die Ummantelung kunststoffbeschichtete Rohre bekanntgeworden, bei welcher nach der üblich hergestellten Schweissverbindung der Rohrenden ohne der Kunststoffschicht dieses Rohrstück wieder mittels einer Kunststoff-Matte mit einer Kunststoffschicht versehen wird. Die Verbindung mit der bestehenden Kunststoffschicht erfolgt durch Verschweissen der überlappenden Matte mittels eines zwischen Matte und Schicht eingelegten Widerstandsdrahtes.

Für eine direkte dichte Verbindung von Kunststoffrohren ist dieses Verfahren zur Herstellung einer durchgehenden Beschichtung an der Schweissverbindung der Rohre nicht vorgesehen.

Es ist daher Aufgabe der Erfindung, eine Schweissverbindung für Kunststoffrohre zu schaffen, welche eine einwandfreie Dichtheit und Festigkeit auch bei grösseren Rohrtoleranzen gewährleistet und einfach herzustellen ist.

Erfindungsgemäss wird diese Aufgabe durch die in den Kennzeichen des Anspruches 1 angeführten Merkmale gelöst.

Durch die kennzeichnenden Merkmale der erfindungsgemässen Schweissverbindung können keine in Längsrichtung durchgehenden nicht geschweisste Bereiche bzw. Fugen entstehen, wodurch deren Verwendung auch bei grösseren Rohrdurchmessern und bei Rohren mit grösseren Durchmessertoleranzen ermöglicht wird. Eine dichte und feste Rohrverbindung ist somit auch bei derartigen Rohren gewährleistet.

Besonders vorteilhafte Ausgestaltungen der Schweissverbindung sind durch die Merkmale der weiteren Ansprüche gekennzeichnet.

Die Erfindung wird anhand der Zeichnung näher dargestellt.

Es zeigen :

Figur 1 eine Rohrverbindung mit eingelegter Heizmatte und noch geöffneter Muffe vor dem Verschweissen,

Figur 2 die Heizmatte im ausgerollten Zustand,

Figur 3 einen Querschnitt durch eine fertig montierte aber noch nicht verschweisste Rohrverbindung,

Figur 4 eine Seitenansicht der gleichen Verbindung,

Figur 5 eine zweite Ausführungsart der Schweissverbindung im Querschnitt,

Figur 6 die in Fig. 5 dargestellte Verbindung vor dem Verschweissen,

Figur 7 einen Schnitt entlang der Linie VII-VII von Fig. 6, und

Figur 8 eine perspektivische Darstellung der Schweissverbindung gemäss Fig. 5.

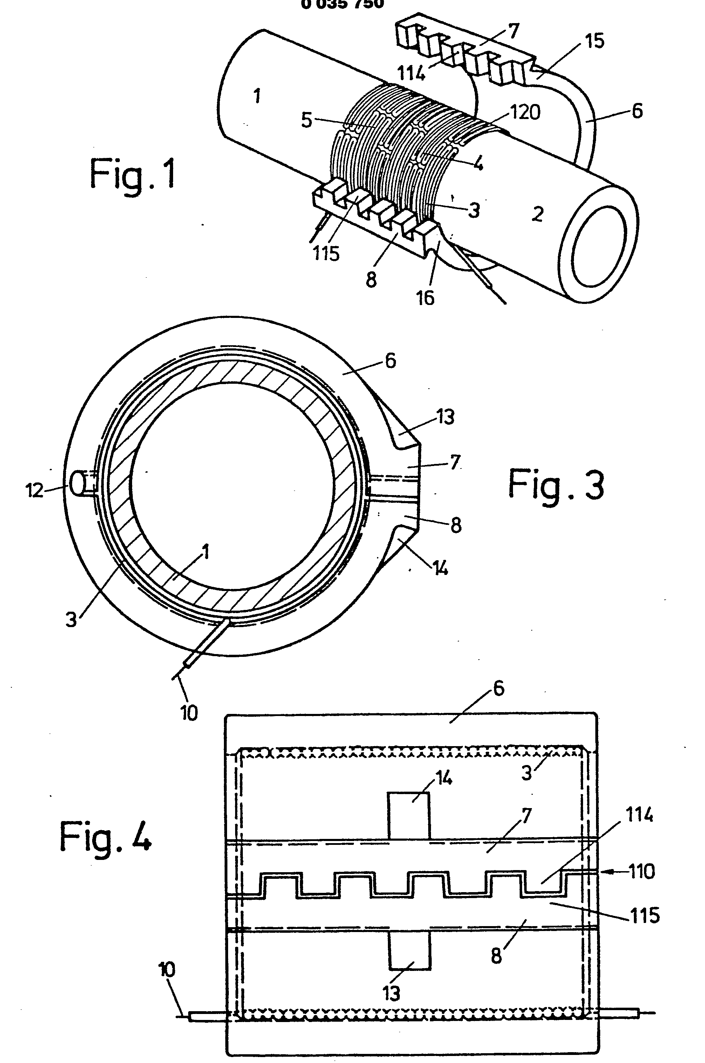

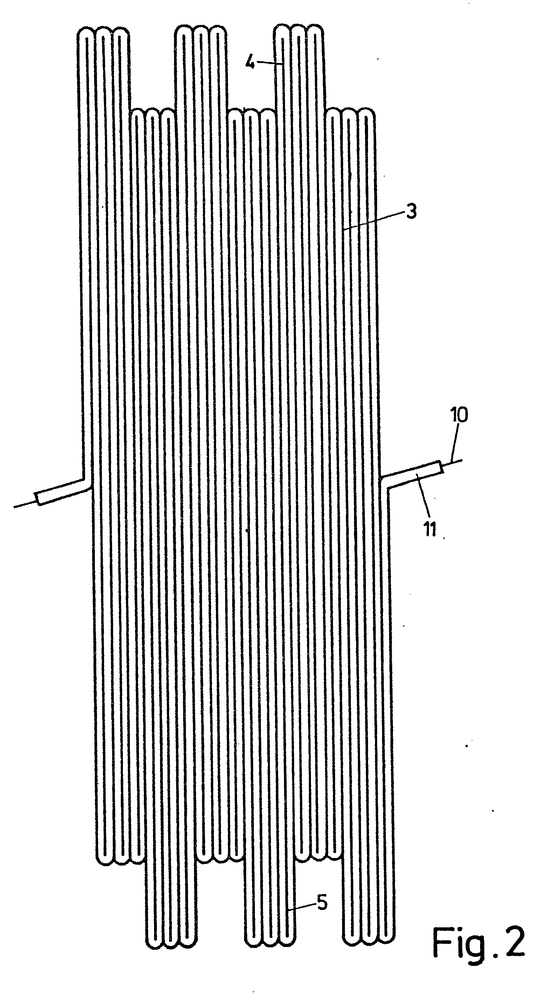

Die Fig. 1 zeigt eine Rohrverbindung im halbmontieren Zustand. Die beiden Rohrenden 1 und 2 sind fluchtend aneinandergefügt, und die Heizmatte 3 ist um die Verbindungsstelle der Rohrenden herumgeschlungen. Die Enden der Heizmatte 3 weisen eine Verzahnung 4, 5 auf, welche ineinandergreifen und bilden derart einen Mantel, welcher auch bei grösseren Toleranzen keinen über die ganze Breite der Heizmatte 3 verlaufenden Spalt ermöglicht, der zu Fehlern in der nachfolgenden Verschweissung führen könnte. Um die Heizmatte 3 wird nun eine Muffe 6 gelegt, welche an deren Enden 15, 16 zwei Verzahnungen 114, 115 aufweist, die im fertig montierten Zustand der Muffe ineinander greifen. Die beiden Verzahnungen 4, 5 sowie 114, 115 sind in Umfangsrichtung mindestens 15° bzw. mindestens 20 mm gegeneinander versetzt, um zu vermeiden, dass durch Ueberlagerung von zwei theoretischen Schwachstellen die Fehlerwahrscheinlichkeit steigt. Durch die Verzahnungen werden die Schweissflächen, im Vergleich zu den Berührungsflächen beim stumpfen Stoss erheblich vergrössert.

Die Fig. 2 zeigt die ausgerollte Heizmatte 3, welche aus einer zick-zack-förmigen Anordnung eines Heizdrahtes 10 besteht. Wie man leicht erkennt, sind die Verzahnungen 4, 5 einfach durch entsprechende Verlegung des Heizdrahtes 10 ohne besondere Verformung oder Schnitte herzustellen. Zur leichten und schnellen Verarbeitung jedoch ist eine fertige Matte günstiger, die, um elektrische Kurzschlüsse auszuschliessen, aus einem isolierten Heizdraht bestehen muss. Als Material für die Isolierschicht 11 ist es nötig denselben Stoff oder ein verwandtes Compound zu wählen, aus dem auch die miteinander zu verschweissenden Teile bestehen, wobei die Isolierschicht als Lieferant für die Schmelze dient.

Die beiden abstehenden Enden des Heizdrahtes 10 stehen im fertig montierten Zustand der Verbindung unter der Muffe hervor und werden mittels Klemm- oder Steckverbindungen an eine Stromquelle geschlossen.

Die Heizmatte hat im verschweissten Zustand eine zweite Funktion, nämlich eine Art Armierung für die Verbindung zu bilden. Die Bereiche 120 sind kleine Hohlräume, die beim Verschweissen durch Verschieben des Materials aufgefüllt werden.

Die Fig. 3 zeigt einen Querschnitt durch die fertig montierte Rohrverbindung vor der Verschweissung. Um das Rohr 1 ist die Heizmatte 3 und um diese die Muffe 6 geschlungen. Die Enden des Heizdrahtes 10 stehen unter der Muffe 6 hervor.

Zwei Spannstegen 7 und 8 gegenüberliegend, weist die Muffe 6 ein Filmscharnier 12 auf, welches nur zur leichteren Montage der Muffe dient. Bei flexiblen Materialien kann auf das Scharnier verzichtet werden.

Die beiden Spannstege 7 und 8 weisen im zusammengefügten Zustand einen trapezförmigen Querschnitt auf und bilden so zwei Hohlkehlen mit dem übrigen Muffenkörper, welches es gestatten, mittels einer Spanneinrichtung, beispielsweise einer Spannzange, die Muffe fest auf die Rohrenden zu pressen bis die Verschweissung zu Ende ist.

Zur Verstärkung besitzen die Spannstege 7, 8 Rippen 13 und 14, welche auch einen besseren Halt für die Spannzange gewährleisten.

Die Fig. 4 zeigt eine Rohrverbindung von der Seite, wobei die Verzahnung 114, 115, die beiden Spannstege 7 und 8 sowie die Rippen 13 und 14 und der eckig verlaufende Schlitz 110 zu erkennen sind.

Im fertig montierten Zustand werden nun die Drahtenden 10 an einen Regeltransformator oder eine Thyristorregelschaltung zur Einstellung der Spannung und/oder der Stromstärke angeschlossen. Unter der vom Strom erzeugten Wärme verschweissen die mittels der Klemmzange zusammengepressten Flächen der Rohre und der Muffe 6 mit der Isolierung der Heizmatte 3. Die Schweisszeit kann mittels eines einstellbaren Timers festgelegt werden. Nach teilweisem Erkalten wird die Spannzange abgenommen, um den Teilchen Gelegenheit zu geben, etwaige innere Spannungen abzubauen.

Durch die Dosierung des Anpressdruckes der Spannzange, der Heizleistung und der Heiztemperatur, kann das Verschlaufen der Kunststoffmoleküle dosiert geregelt werden. Hierzu weist die Spannzange eine einstellbare Feder auf.

Die vorliegende erfindungsgemässe Methode hat den Vorteil, dass grosse Rohrtoleranzen und Oberflächenfehler an den Rohrenden sowie ungerade Schnitte überbrückt werden können, ohne die Haltbarkeit der Verbindung zu beeinflussen.

Bei Materialien mit starken Schrumpfvorgängen beim Schweissen können durch längere Vorspannungen — analog einem Nachdruckverfahren beim Spritzguss — die Schwindungsvorgänge nahezu ausgeglichen werden.

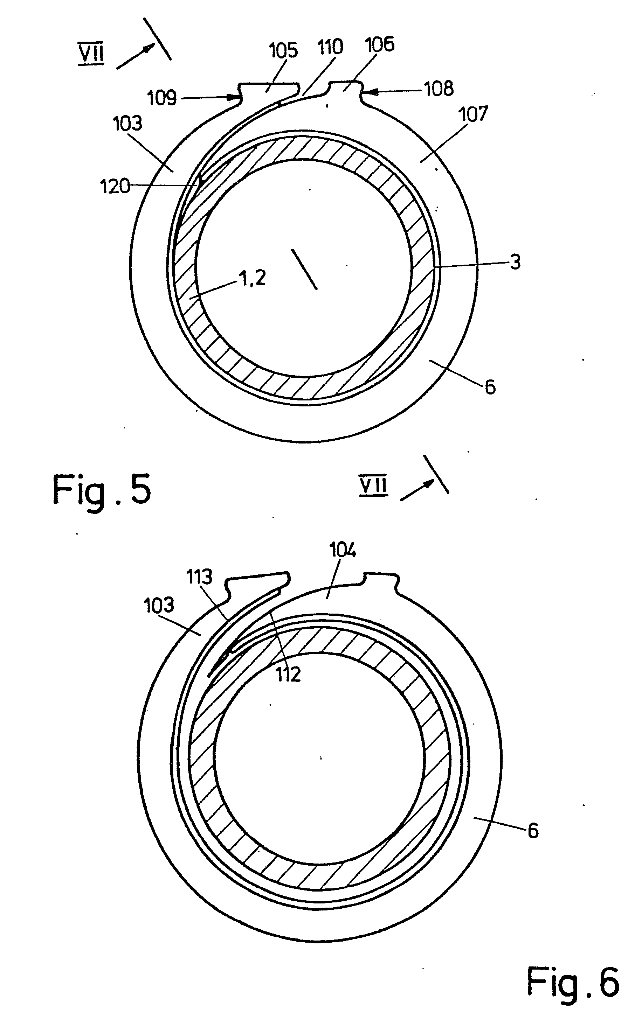

Die Fig. 5 zeigt eine zweite Ausführungsart der Erfindung, wobei die Muffe 6 aus einem Teil besteht, der sich zu seinen Enden 103, 104 hin verjüngt und Verbindungsflächen 112, 113 aufweist, den grössten Teil über aber gleich dick ist. Die beiden sich verjüngenden Enden 103, 104 überlappen sich bei geschlossener Muffe, und werden mittels zweier Spannstege 106, 107 gemäss den Pfeilen 108, 109 und einer nicht dargestellten Spanneinrichtung zusammengepresst, damit sich die Muffe eng an die Rohre 1, 2 anlegt. Zwischen Muffe 6 und den Rohren 1, 2 ist eine Heizmatte 3 angeordnet, welche die Rohre 1, 2 völlig umschliesst und hernach in dem zwischen den Muffenenden 103, 104 befindlichen Schlitz 110 ausläuft. Die Form der Schweissflächen ist derart, als wäre die Muffe im flachen Zustand unter kleinem Winkel zu ihrer Oberfläche axial durchschnitten worden, wobei die Verbindungsflächen 112, 113 grösser sind, als die Fläche beim stumpfen Stoss.

Auf diese Weise werden durch einen einzigen Arbeitsgang sowohl die Muffe 6 mit den Rohren 1, 2 als auch die Muffenenden 103, 104 miteinander verschweisst.

Die Fig. 6 zeigt die Muffe 6 im geöffneten Zustand, wobei die Muffenenden 103, 104 auseinander stehen, so dass die ganze Muffe über die Rohrenden geschoben werden kann.

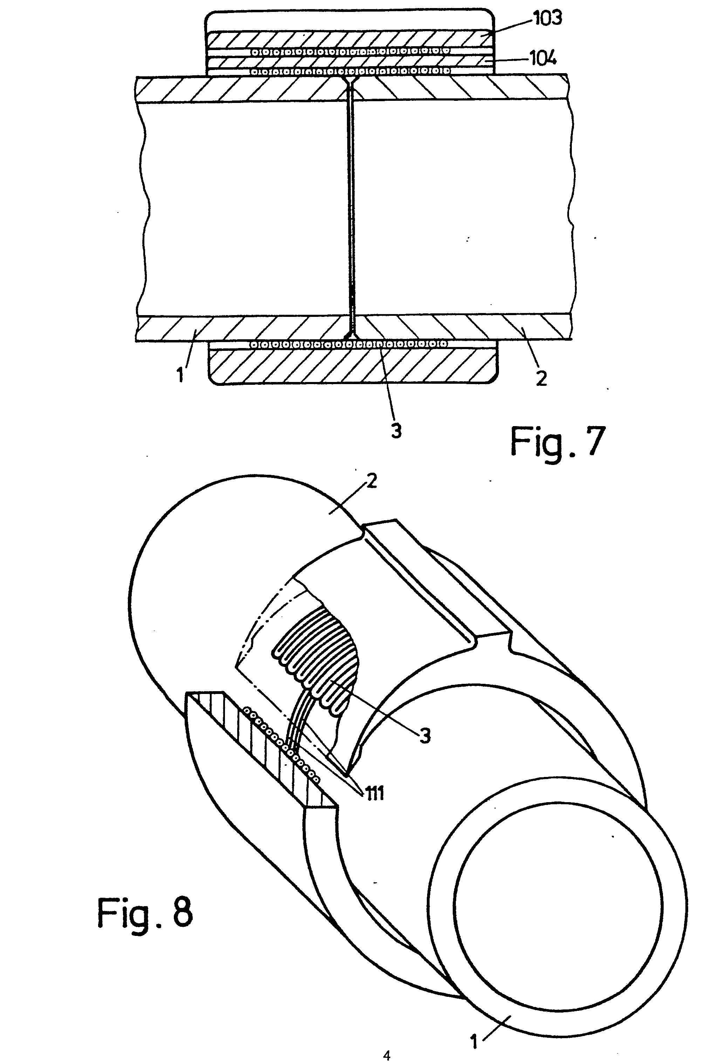

Die Fig. 7 zeigt einen Längsschnitt durch die Muffe 6 sowie durch die Rohrenden 1 und 2, wobei die Heizmatte 3 über den grössten Teil des Umfangs der Rohre 1 und 2 eine und im Bereich der Ueberlappung der beiden Muffenteile 103, 104 zwei Lagen aufweist.

Die Fig. 8 zeigt eine Schrägansicht der fertig verschweissten Muffe mit abgeschnittenem Muffenende 103 (Fig. 7). Die Heizmatte 3 weist Anschlüsse 111 auf, welche an einem von der Verbindungsstelle der beiden zu verschweissenden Muffenteile entfernten Ort zwischen Muffe und Rohrende heraus geführt sind. Die Heizmatte 3, welche mit der Muffe abgeschnitten dargestellt ist, ist länger als der Umfang der Rohrenden, und überlappt sich deshalb winkelmässig, wobei jedoch keine Berührung des über den vollen Umfang hinausgehenden Teils mit dem am Rohr anliegenden Teil erfolgt. Am Ueberlappungspunkt bildet sich ein kleiner Hohlraum der beim Verschweissen durch Verschiebung des geschmolzenen Materials aufgefüllt wird. Durch die Ausbildung der Verbindungsflächen 112, 113 ist ein tangentiales Gleiten der entsprechenden Muffenenden 103, 104 gewährleistet, welches beim Verschweissen die Umfangsverkleinerung ermöglicht.

Auch bei der in den Fig. 1 bis 4 dargestellten Ausführungsvariante ist beim Verschweissen eine Umfangsverkleinerung gewährleistet, wenn der zick-zack-förmige Schlitz 110 zwischen den Verzahnungen 114, 115 vor dem Verschweissen genügend gross ist.

**Ansprüche**

1. Schweissverbindung zweier fluchtender Kunststoffrohre (1,2) mit einer, die Verbindungsstelle der beiden Kunststoffrohre im wesentlichen völlig umschlingenden, im fertig montierten Zustand einen Längsschlitz (110) aufweisenden Muffe (6), welche zumindest während des Schweissvorgangs unter einer, die Muffe in Richtung auf Umfangsverkleinerung vorspannenden Kraft steht, sowie mit einer zwischen die Rohrenden (1, 2) und die Muffe (6) einfügbaren Heizmatte (3) aus einem elektrisch aufheizbaren Draht, dadurch gekennzeichnet, dass die beiden, den Schlitz (110) bildenden Enden (15, 16 bzw. 103, 104) der Muffe (6) und die längs der Rohre (1, 2) verlaufenden Enden der Heizmatte (3) jeweils entweder a) umfangsmässig ineinandergreifend, oder b) sich gegenseitig überlappend ausgebildet sind.

2. Schweissverbindung nach Anspruch 1 und Merkmal a) dadurch gekennzeichnet, dass die Enden (15, 16) der Muffe (6) mit im montierten Zustand ineinander greifende Verzahnungen (114, 115) versehen sind.

3. Schweissverbindung nach Anspruch 1 und Merkmal a), dadurch gekennzeichnet, dass die Heizmatte (3) Verzahnungen (4, 5) aufweist, welche nach Umschlingung der Rohrenden (1, 2) ineinandergreifen.

4. Schweissverbindung nach den Ansprüchen 2 und 3, dadurch gekennzeichnet, dass die Verzahnungen (4, 5) der Heizmatte (3) zu den Verzahnungen (114, 115) der Muffe (6) umfangsmässig winkelversetzt sind.

5. Schweissverbindung nach Anspruch 4, dadurch gekennzeichnet, dass die Winkelversetzung mindestens 15° bzw. am Umfang gemessen mindestens 20 mm beträgt.

6. Schweissverbindung nach Anspruch 1 und Merkmal b), dadurch gekennzeichnet, dass die Enden (103, 104) der Muffe (6) sich überlappende, dem Ende hin verjüngende Verbindungsflächen (112, 113) aufweisen.

7. Schweissverbindung nach Anspruch 6, dadurch gekennzeichnet, dass die Heizmatte (3) sich nach voller Umschlingung der Rohrenden (1, 2) weiter bis in die sich überlappenden Verbindungsflächen (112, 113) der Muffe (6) erstreckt.

8. Schweissverbindung nach Anspruch 1 oder einem der Ansprüche 2 bis 7, dadurch gekennzeichnet, dass die Muffe (6) entlang deren Enden (15, 16 bzw. 103, 104) nach aussen gerichtete Spannstege (7, 8 bzw. 106, 107) aufweist, durch welche die Muffe (6) mittels einer Spanneinrichtung in Richtung auf eine Umfangsverkleinerung vorspannbar ist.

9. Schweissverbindung nach den Ansprüchen 1 bis 8, dadurch gekennzeichnet, dass die Vorspannung der Spanneinrichtung und die Dosierung bzw. Programmierung von Heiztemperatur und Heizleistung derart erfolgt, dass zuerst eine Homogenisierung und am Schluss ein dosierter Nachdruck beim Abkühlen erfolgt.

**Claims**

1. Welded joint of two aligned plastic pipes (1, 2) with a sleeve (6) substantially completely looping round the connection point of the two plastic pipes and, in the ready assembled state, having a longitudinal slit (110), which sleeve, at least during the welding process, is under a prestressing force which tends to cause circumferential reduction of the sleeve, and with a heating mat (3) of an electrically heatable wire that can be inserted between the pipe ends (1, 2) and the sleeve (6), characterised in that the two ends (15, 16 or 103, 104) of the sleeve (6) forming the slit (110) and the ends of the heating mat (3) running along the pipes (1, 2) are made respectively to be either a) circumferentially interlocking, or b) mutually overlapping.

2. Welded joint according to claim 1 and feature a), characterised in that the ends (15, 16) of the sleeve (6) are provided with teeth (114, 115) that interlock in the assembled state.

3. Welded joint according to claim 1 and feature a), characterised in that the heating mat (3) has teeth (4, 5) which interlock after looping round the pipe ends (1, 2).

4. Welded joint according to claims 2 and 3, characterised in that the teeth (4, 5) of the heating mat (3) are angularly displaced on the circumference with respect to the teeth (114, 115) of the sleeve (6).

5. Welded joint according to claim 4, characterised in that the angular displacement is at least 15° or at least 20 mm measured on the circumference.

6. Welded joint according to claim 1 and feature b), characterised in that the ends (103, 104) of the sleeve (6) have connection surfaces (112, 113) that overlap and taper towards the end.

7. Welded joint according to claim 6, characterised in that the heating mat (3) extends in accordance with the complete looping of the pipe ends (1, 2) and up to the overlapping connection surfaces (112, 113) of the sleeve (6).

8. Welded joint according to claim 1 or one of claims 2 to 7, characterised in that the sleeve (6) has along its ends (15, 16 or 103, 104) outwardly directed clamping jaws (7, 8 or 106, 107) through which the sleeve (6) can be prestressed by means of a tensioning device with the aim of circumferential reduction.

9. Welded joint according to claims 1 to 8, characterised in that the prestressing of the tensioning device and the metering or programming of heating temperature and heating capacity is carried out in such a way that first of all homogenisation and then a metered dwell pressure occurs during cooling.

**Revendications**

1. Assemblage soudé de deux tubes de matière plastique alignés (1, 2) comprenant un manchon (6) qui entoure sensiblement entièrement la zone d'assemblage des deux tubes en matière plastique, qui présente à l'état de montage final une fente longitudinale (110) et qui, du moins pendant l'opération de soudage, est soumis à une force qui précontraint le manchon dans le sens d'une diminution du périmètre, ainsi qu'une nappe chauffante (3) faite d'un fil pouvant être chauffé électriquement, et qui peut être intercalée entre les extrémités de tubes (1, 2) et le manchon (6), cet assemblage étant caractérisé en ce que les deux extrémités (15, 16 ou 103, 104) du manchon (6) qui forment la fente (110) et les extrémités de la nappe chauffante (3) qui s'étendent le long des tubes (1, 2) sont, soit a) engrenées l'une dans l'autre dans le sens du périmètre, soit b) à recouvrement mutuel.

2. Assemblage soudé selon la revendication 1 et la caractéristique a), caractérisé en ce que les extrémités (15, 16) du manchon (6) sont munies de dentures (114, 115) qui engrènent l'une dans l'autre à l'état monté.

3. Assemblage soudé selon la revendication 1 et la caractéristique a), caractérisé en ce que la nappe chauffante (3) présente des dentures (4, 5) qui engrènent l'une dans l'autre après l'enveloppement des extrémités (1, 2) du tube.

4. Assemblage soudé selon les revendications 2 et 3, caractérisé en ce que les dentures (4, 5) de la nappe chauffante (3) sont décalées angulairement dans la direction circonférentielle par rapport aux dentures (114, 115) du manchon (6).

5. Assemblage soudé selon la revendication 4, caractérisé en ce que le décalage angulaire représente au moins 15° ou, mesuré sur le périmètre, au moins 20 mm.

6. Assemblage soudé selon la revendication 1 et la caractéristique b), caractérisé en ce que les extrémités (103, 104) du manchon (6) présentent des surfaces de jonction (112, 113) qui se recouvrent et s'amincissent vers l'extrémité.

7. Assemblage soudé selon la revendication 6, caractérisé en ce que, lorsque les extrémités (1, 2) des tubes sont entièrement enveloppées, la nappe chauffante (3) s'étend plus loin dans les surfaces de jonction (112, 113) du manchon (6) qui se recouvrent mutuellement.

8. Assemblage soudé selon la revendication 1 ou l'une quelconque des revendications 2 à 7, caractérisé en ce que le manchon (6) présente, le long de ses extrémités (15, 16 ou 103, 104) des nervures de serrage (7, 8 ou 106, 107) dirigées vers l'extérieur par lesquelles le manchon (6) peut être précontraint au moyen d'un dispositif de serrage dans le sens qui tend à réduire le périmètre.

9. Assemblage soudé selon les revendications 1 à 8, caractérisé en ce que la précontrainte du dispositif de serrage et le dosage ou la programmation de la température de chauffe et de la puissance de chauffe s'effectuent de telle manière qu'il se produise tout d'abord une homogénéisation et, à la fin, une post-compression dosée pendant le refroidissement.

0 035 750

Fig. 1

Fig. 3

Fig. 4

Fig.2

Fig. 5

Fig. 6

3

Fig. 7

Fig. 8